(19) Europäisches Patentamt
European Patent Office
Office européen des brevets

(11) **EP 3 395 658 A1**

(12) **EUROPÄISCHE PATENTANMELDUNG**

(43) Veröffentlichungstag:
**31.10.2018 Patentblatt 2018/44**

(21) Anmeldenummer: **18173961.6**

(22) Anmeldetag: **26.08.2013**

(51) Int Cl.:
*B62J 1/00* (2006.01)   *G01B 21/00* (2006.01)
*A61G 5/10* (2006.01)   *G01B 5/02* (2006.01)
*A47C 31/12* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2012   DE 102012215340**

(62) Dokumentnummer(n) der früheren Anmeldung(en) nach Art. 76 EPÜ:
**13181705.8 / 2 703 261**

(71) Anmelder: **Ergon International GmbH**
**56070 Koblenz (DE)**

(72) Erfinder: **ARNOLD, Franc**
**56068 Koblenz (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

Bemerkungen:
Diese Anmeldung ist am 24-05-2018 als Teilanmeldung zu der unter INID-Code 62 erwähnten Anmeldung eingereicht worden.

(54) **VERFAHREN ZUR INDIVIDUELLEN BESTIMMUNG EINER FAHRRAD-SATTELGRÖSSE**

(57)     Bei einem Verfahren zur individuellen Bestimmung einer Fahrrad-Sattelgröße wird vorzugsweise der Hüftumfang eines Benutzers bestimmt. Auf Basis des Hüftumfangs erfolgt ein Bestimmen einer Sattelgröße mittels eines Algorithmus. Zusätzlich können weitere körperspezifische Maße sowie weitere Einflussfaktoren berücksichtigt werden.

Fig.1

EP 3 395 658 A1

**Beschreibung**

Die Erfindung betrifft ein Verfahren zur individuellen Bestimmung einer Fahrrad-Sattelgröße.

Der Komfort beim Fahrradfahren hängt stark von dem ausgewählten Fahrradsattel ab. Neben einer Vielzahl unterschiedlicher Dämpfungscharakteristika bei Fahrradsatteln beispielsweise durch Vorsehen unterschiedlicher Schaumstofflagen, eingesetzten Gelpads und der Gleichen stellt insbesondere die Sitzbreite eines Fahrradsattels einen wesentlichen Aspekt dar. Die Sitzbreite eines Fahrradsattels wird bei modernen Fahrradsätteln an den individuellen Sitzknochenabstand angepasst. Dies erfolgt dadurch, dass in einem Fachgeschäft der individuelle Sitzknochenabstand bestimmt wird. Anschließend wird ein Fahrradsattel ausgewählt, dessen Breite auf den Abstand der Sitzknochen abgestimmt ist. Hierdurch soll bewirkt werden, dass im Bereich der Sitzknochen, in dem die größte Druckbelastung auftritt, eine entsprechende Dämpfung vorgesehen ist. Hierdurch sollen Druckstellen im Bereich der Sitzknochen des Benutzers vermieden werden. Zur Bestimmung des Sitzknochenabstandes ist es bekannt, in einem Fachgeschäft eine Wellpappe auf einem Stuhl oder der gleichen anzuordnen, auf die sich der Benutzer bzw. Kunde setzt. Hierbei erfolgt ein Eindrücken der Wellpappe durch die Sitzknochen. Der Abstand der beiden Eindrücke durch die Sitzknochen kann mit einem Maßstab bestimmt werden, sodass auf Basis des bestimmten Abstandes ein Sattel ausgewählt wird, dessen Sitzpolster denselben Abstand aufweisen.

Desweiteren ist die Bestimmung des Sitzknochenabstandes mit Hilfe eines Gelkissens aus EP 1 698 545 bekannt. Dieser ein Gel aufweisende Sitzbezug kann auf einen Sattel gespannt werden. Der Benutzer bzw. Käufer eines neuen Sattels muss sich auf den Sattel setzten. Die beiden Sitzknochen verdrängen das Gel in dem Gel -Überzug. Da in dem Gel-Überzug unmittelbar eine Messskala angeordnet sein kann, kann der Abstand der Sitzknochen unmittelbar bestimmt werden.

Die bekannten Messsysteme zur individuellen Bestimmung einer Fahrrad-Sattelgröße in Abhängigkeit des individuellen Abstandes der Sitzknochen weisen den wesentlichen Nachteil auf, dass es für den Benutzer bzw. Käufer erforderlich ist ein Fachgeschäft aufzusuchen. Dies hat insbesondere den Nachteil, dass das Erwerben eines Fahrradsattels in Online-Shops nur schwierig möglich ist, da dem Käufer der individuelle Sitzknochenabstand nicht bekannt ist. Desweiteren weisen die bekannten Messsysteme die Nachteile auf, dass weitere körperspezifische Maße wie beispielsweise das Gewicht und die Größe des Käufers nicht berücksichtigt werden. Auch Faktoren wie der Fahrradtyp, die Sitzposition oder die jährliche Kilometerleistung können allenfalls durch Abschätzungen und Erfahrungen des Verkäufers mit berücksichtigt werden. Ein beispielsweise durch Berechnungen, die derartige Faktoren mit berücksichtigen, erfolgendes konkretes Bestimmen eines für den entsprechenden Benutzer geeigneten Sattels kann nicht erfolgen.

Aufgabe der Erfindung ist es ein Verfahren zur individuellen Bestimmung einer Fahrrad-Sattelgröße zu schaffen, mit welchem ein Bestimmen des geeigneten Sattels auch unabhängig von einem Fachgeschäft möglich ist, sodass insbesondere auch eine Online-Bestellung eines geeigneten Fahrradsattels ermöglicht ist.

Die Lösung der Aufgabe erfolgt erfindungsgemäß durch die Merkmale des Anspruchs 1 oder 6.

Grundlage des erfindungsgemäßen Verfahrens zur individuellen Bestimmung einer Fahrrad-Sattelgröße ist die Erkenntnis, dass eine Relation zwischen dem Sitzknochenabstand und dem Hüftumfang eines Benutzers besteht. Diese Relation wurde durch Studien und Untersuchungen belegt. Zur Bestimmung der individuellen Fahrrad-Sattelgröße wird somit in einem ersten Schritt der Hüftumfang eines Benutzers bestimmt. In Abhängigkeit einer beispielsweise in einem Rechenalgorithmus hinterlegten Tabelle kann so in Abhängigkeit des gemessenen Hüftumfangs des Benutzers bzw. Käufers eine Ermittlung der Sattelgröße erfolgen. Aufgrund der Erkenntnis des Zusammenhangs zwischen Hüftumfang und Sitzknochenabstand ist es somit mit Hilfe des erfindungsgemäßen Verfahren auf einfache Weise möglich, beispielsweise auch zur Bestellung eines Fahrradsattels in einem Online-Shop, die individuelle Sattelgröße zu bestimmen.

Besonders bevorzugt ist es, dass zusätzlich zu der individuellen Bestimmung des Hüftumfangs, weitere körperspezifische Maße des Benutzers bestimmt bzw. abgefragt werden.

In bevorzugter Weiterbildung der Erfindung weist der Algorithmus somit zumindest eine Variable auf, die mindestens ein bestimmtes körperspezifisches Maß berücksichtigt. Bei dem körperspezifischen Maß kann es sich beispielsweise um das Gewicht und/oder die Größe des Benutzers bzw. Käufers handeln. Mit Hilfe des Algorithmus wird dieses körperspezifische Maß sodann in eine zu dem entsprechenden körperspezifischen Maß korrespondierende Variablen-Größe umgewandelt oder das entsprechende körperspezifische Maß unmittelbar von dem Algorithmus mit verarbeitet. Beispielsweise wir dem gemessenen Hüftumfang ein Zahlenwert zugeordnet, der sodann auf Grund des körperspezifischen Maßes verändert beispielsweise vergrößert oder verkleinert wird. Auch kann zunächst eine Summe aus Körpergröße, Gewicht und Hüftumfang gebildet werden, wobei dieser Summe sodann ein Wert für einen Sitzknochenabstand zugeordnet ist. Die einzelnen Summanden können hierbei mit Anpassungsfaktoren multipliziert werden.

Besonders bevorzugt ist es zur Bestimmung des Sitzknochenabstandes, in dem Algorithmus zusätzlich einen experimentell bestimmten minimalen Köperwert zu berücksichtigen. Dieser wird insbesondere von der Summe der Körpermaße abgezogen. Hierbei ist es bevorzugt, dass der Algorithmus derart ausgestaltet ist, dass diese Differenz minimal Null wird.

Des Weiteren ist es bevorzugt, in dem Algorithmus einen Statistikfaktor zu berücksichtigen. Hierbei handelt es sich um einen experimentell ermittelten konstanten Wert.

Des Weiteren ist es bevorzugt einen Wert eines Sitzknochenabstand-Bereichs zu berücksichtigen. Hierbei handelt es sich beispielsweise um die Differenz zwischen einem maximalen und einem minimalen Sitzknochenabstand.

Es ist ferner bevorzugt in dem Algorithmus zur Bestimmung des Sitzknochenabstandes den Wert eines minimalen Sitzknochenabstandes zu berücksichtigen. Diese Werte können insbesondere experimentell bestimmt werden.

Die vorstehend definierten Werte, die vorzugsweise in Kombination in dem Algorithmus berücksichtigt werden, können vorzugsweise experimentell bestimmt werden und unterscheiden sich je nach Geschlecht des Benutzers.

Zur Bestimmung des Sitzknochenabstandes wird in besonders bevorzugter Ausführungsform nachfolgender Algorithmus verwendet:

$$SKA = \max\left(\left(\left(x_1/a_1 + x_2 + x_3\right) - a_2\right),0\right)/a_3/a_4 + a_5$$

(Gleichung 1)

Hierbei ist:

SKA = Sitzknochenabstand
$x_1$ = Körpergröße
$x_2$ = Gewicht
$x_3$ = Hüftumfang
$a_1$ = Korrekturfaktor
$a_2$ = experimentell bestimmter minimaler Körperwert
$a_3$ = Statistikfaktor
$a_4$ = Wert eines Sitzknochenabstand-Bereichs
$a_5$ = Wert eines minimalen Sitzknochenabstands

Untersuchungen haben ergeben, dass bei einem männlichen Benutzer zufriedenstellende Ergebnisse des ermittelten Sitzknochenabstandes mit den nachfolgend aufgeführten Werten erzielt werden können:

$a_1$ = 1,5 - 2,5, insbesondere 2
$a_2$ = 210 - 230
$a_3$ = 100 - 120
$a_4$ = 5,5 - 6,5
$a_5$ = 7,5 - 8,5

Bei Frauen können mit den nachfolgenden Werten gute Ergebnisse für den Sitzknochenabstand erzielt werden:

$a_1$ = 1,5 - 2,5, insbesondere 2
$a_2$ = 185 - 205
$a_3$ = 120 - 140
$a_4$ = 5,5 - 6,5
$a_5$ = 9-10

Bei einer weiteren bevorzugten Ausführungsform wird insbesondere vor Beginn der Berechnung mindestens ein Hauptfaktor bestimmt bzw. abgefragt. Bei dem Hauptfaktor handelt es sich insbesondere um das Geschlecht des Benutzers und den Fahrradtyp, wie beispielsweise Mountainbike oder Rennrad. Die Abfrage der Hauptfaktoren beeinflusst die einzelnen Faktoren $a_i$.

Bei einer weiteren bevorzugten Ausführungsform wird mindestens ein weiterer Einflussfaktor bestimmt bzw. abgefragt. Ein weiterer Einflussfaktor kann die von dem Benutzer bzw. Käufer gefahrene Jahreskilometerleistung, das Alter, die Sitzposition, die Empfindlichkeit im Sitzbereich und/ oder die Flexibilität im Beckenbereich sein. Für einzelne, insbesondere jeden dieser weiteren Einflussfaktoren weist der Algorithmus wiederum eine Variable auf. Dem Einflussfaktor wird hierbei wiederum eine Variablengröße zugeordnet oder der entsprechende Einflussfaktor unmittelbar im Algorithmus berücksichtigt.

Die Zuordnung der einzelnen Variablen zu Variablengrößen kann hierbei stufenweise oder auch stufenlos erfolgen. Hierbei können den abgefragten Variablengrößen beispielsweise lineare Funktionen zugeordnet sein.

Die Variablen der Einflussfaktoren werden insbesondere derart berücksichtigt, dass der mit der Gleichung 1 oder einem entsprechenden Algorithmus berechnete Sitzknochenabstand um vorgegebene Werte vergrößert oder verringert wird. Hierzu wird beispielsweise die Variable des Alters in unterschiedliche Bereiche wie <30 Jahre, 30 - 50 Jahre, >50 Jahre eingeteilt und der Sitzknochenabstand um -0,5, 0 oder +0,5 geändert.

Entsprechend kann durch den Einflussfaktor der Sitzposition der Sitzknochenabstand bei einer sportlichen Sitzposition verringert und bei einer gemütlichen bzw. aufrechten Sitzposition vergrößert werden.

Eine entsprechende Änderung kann auch durch die Variable betreffend der Jahreskilometerleistung erfolgen. Je nach vorgegebenen Grenzen wird bei hohen Jahreskilometerleistungen der Sitzknochenabstand verringert, bei mittleren Kilometerleistungen unverändert belassen und bei geringen Kilometerleistungen vergrößert.

Entsprechendes gilt auch für die Flexibilität des Beckens, da dies ebenfalls einen Einflussfaktor für die Sitzposition des Benutzers darstellt. Je nachdem, ob die Flexibilität gering, normal oder groß ist, wird der Sitzknochenabstand verringert, bleibt unverändert oder wird vergrößert.

Der Sitzknochenabstand, der insbesondere mit der Gleichung 1 ermittelt wurde, kann daher noch verifiziert werden durch nachfolgende Gleichung:

$$SKA_V = SKA + F_1 + F_2 + F_3 + F_4 + F_5$$

(Gleichung 2)

Hierbei definierten die einzelnen Komponenten:

$SKA_V$ = Verifizierter Sitzknochenabstand
$SKA$ = Sitzknochenabstand, wie er beispielsweise durch Gleichung 1 bestimmt ist.

Die Variablen F, die gegebenenfalls nicht alle berücksichtigt werden, basieren auf den Abfragen nach:

$F_1$ = Alter
$F_2$ = Sitzposition
$F_3$ = Jährliche Fahrleistung
$F_4$ = Druckempfindlichkeit im Sitzbereich
$F_5$ = Flexibilität im Beckenbereich

Zu berücksichtigen ist, dass der Wert $SKA_V$ gegebenenfalls kleiner als ein minimaler Sitzknochenabstand, wie er in Untersuchungen ermittelt wurde, sein kann. In diesem Fall wird von dem minimalen Sitzknochenabstand ausgegangen. Entsprechendes gilt, wenn durch die einzelnen Einflussfaktoren ein verifizierter Sitzknochenabstand ermittelt wird, der die maximale Größe überschreitet. In diesem Fall wird von dem maximalen Sitzknochenabstand ausgegangen.

Da die Gleichung 1 in der Gleichung 2 in bevorzugter Ausführungsform enthalten ist, könnten die beiden Gleichungen auch zu einer Gleichung zusammengefasst werden.

Vorzugsweise ist der Algorithmus somit eine Funktion mit insbesondere mehreren Variablen. Die Variablen berücksichtigen den Hüftumfang und vorzugsweise eine oder mehrere körperspezifische Maße und/oder eine oder mehrere weitere Einflussfaktoren. Desweiteren ist es bei dem erfindungsgemäßen Verfahren möglich jeder Sattelgröße einen Ergebnisbereich zuzuordnen. Nach erfolgter Berechnung durch den Algorithmus unter Berücksichtigung des Hüftumfangs und gegebenenfalls weiterer Variablen erfolgt sodann eine Zuordnung des errechneten Ergebnisses zu einem Ergebnisbereich. Beispielsweise können Ergebnisbereiche von < 80, 80 - 120 und > 100 definiert werden. Den entsprechenden Ergebnisbereichen wird sodann eine Sattelgröße wie beispielsweise S, M und L zugeordnet.

Ein weiteres Verfahren zur individuellen Bestimmung einer Fahrrad-Sattelgröße geht davon aus, dass der Sitzknochenabstand beispielsweise durch Messungen mit Hilfe von Wellpappe oder dem aus EP 1 698 454 bekannten Messkissen bekannt ist. Bei diesem Verfahren wird sodann wiederum mit Hilfe eines Algorithmus, ausgehend von dem bereits bekannten Sitzknochenabstand der Sitzknochenabstand verifiziert. Dies erfolgt durch die Bestimmung weiterer Einflussfaktoren und die Zuordnung von Variablen zu diesen weiteren Einflussfaktoren. Auf Basis des so ermittelten verifizierten Sitzknochenabstandes kann sodann eine Sattelgröße festgelegt bzw. dem Benutzer empfohlen werden. Die berücksichtigten weiteren Einflussfaktoren sind insbesondere die vorstehend anhand der Gleichung 2 beschriebenen Einflussfaktoren, wobei diese in dem entsprechenden Algorithmus gegebenenfalls nur zu einem Teil verwendet werden. Bevorzugt ist es, sämtliche vorstehend beschriebenen Einflussfaktoren zu nutzen.

Das erfindungsgemäße Verfahren zur individuellen Bestimmung einer Fahrrad-Sattelgröße wird in besonders bevorzugter Ausführungsform durch eine Computer-Application durchgeführt, sodass eine Online-Bestimmung der individuellen Fahrrad-Sattelgröße möglich ist. Ebenso kann es sich um ein Plug-In auf einer Webseite handeln.

Es ist bevorzugt, dass nach der Bestimmung eines für den Benutzer geeigneten Sattels diesem nicht nur ein einziger Sattel, sondern auch Alternativsättel angeboten werden. Hierbei handelt es sich beispielsweise um Sättel unterschiedlicher Qualitätsstufen. Dieses Angebot kann wiederum auf Basis der abgefragten Informationen erfolgen. So wird einem Benutzer mit hoher Jahreskilometerleistung ein qualitativ hochwertiger und somit teurer Sattel als erste Alternative angeboten. Als weitere Alternative wird zusätzlich ein etwas kostengünstigerer, ein qualitativ nicht ganz so hochwertiger Sattel angeboten. Im Umkehrfall, d.h. bei einem Benutzer, der eine geringe Jahreskilometerleistung eingegeben hat, wird zunächst der kostengünstigste geeignete Sattel angeboten. Als Alternative kann ein hochwertigerer Sattel angeboten werden.

Nachfolgend wird die Erfindung anhand einer bevorzugten Ausführungsform anhand der anliegenden Zeichnungen näher erläutert.

Es zeigen:

Figur 1  eine erste Eingabemaske einer Computer-Application zur Eingabe von Einflussfaktoren,

Figur 2  eine zweite Eingabemaske einer Computer-Application zur Eingabe von Körpermaßen,

Figur 2a  eine schematische Darstellung zur Erläuterung des Messens des Hüftumfangs,

Figur 2b  eine schematische Darstellung zur Erläuterung der Flexibilität im Beckenbereich und

Figur 3  eine dritte Maske einer Computer-Application zur Ausgabe der berechneten individuellen Fahrrad-Sattelgröße.

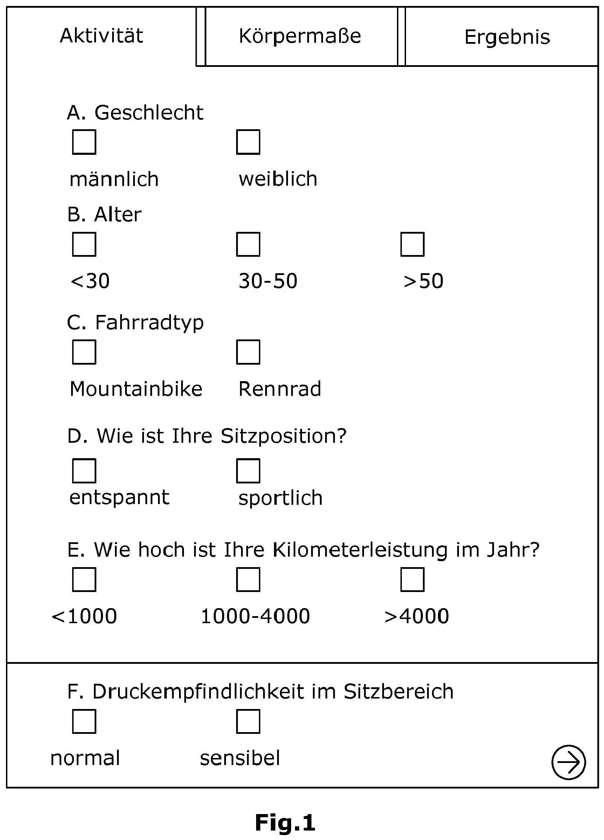

Figur 1 zeigt einen ersten mit "Aktivität" bezeichneten Reiter einer Computer-Applikation zur Bestimmung der individuellen Fahrrad-Sattelgröße. In dieser Eingabemaske werden vom Benutzer bzw. Käufer Hauptfaktoren und Einflussfaktoren eingegeben. Bei den Hauptfaktoren handelt es sich um die Eingabe des Geschlechts und des Fahrrads. Diese Hauptfaktoren führen bei der Verwendung der im Hintergrund des Computerprograms genutzten Gleichung 1 zur Auswahl der entsprechenden Faktoren $a_1$ - $a_5$. Die Ferner im dargestellten Ausführungsbeispiel eingegebenen Einflussfaktoren betreffen das Alter, die bevorzugte Sitzposition, die jährliche Fahrleistung und die Druckempfindlichkeit. Diese Einflussfaktoren werden vorzugsweise in Variablen umgewandelt und in der Gleichung 2 berücksichtigt. Die entsprechende Eingabe des Benutzers bewirkt somit eine Zuordnung einer Variablengröße, die sodann von dem im Hintergrund ablaufenden Algorithmus berücksichtig wird. Bei den Abfragen handelt es sich um Eingabefelder die durch anklicken aktiviert werden. Die Kilometerleistung kann individuell als Zahlenwert eingeben werden, oder mit Hilfe eines Pull-Down-Menüs festgelegt werden. Anstelle von anzuklickenden Boxen können selbstverständlich auch Pull-Down-Menüs für die einzelnen Eingaben verwendet werden.

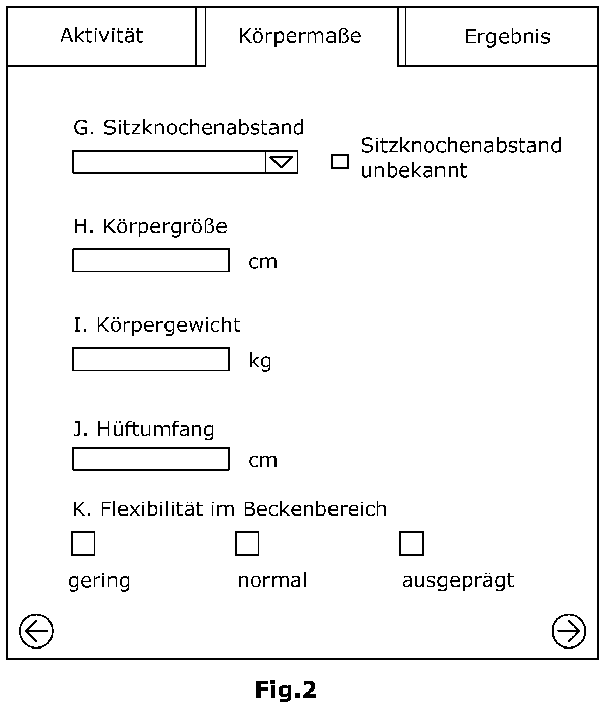

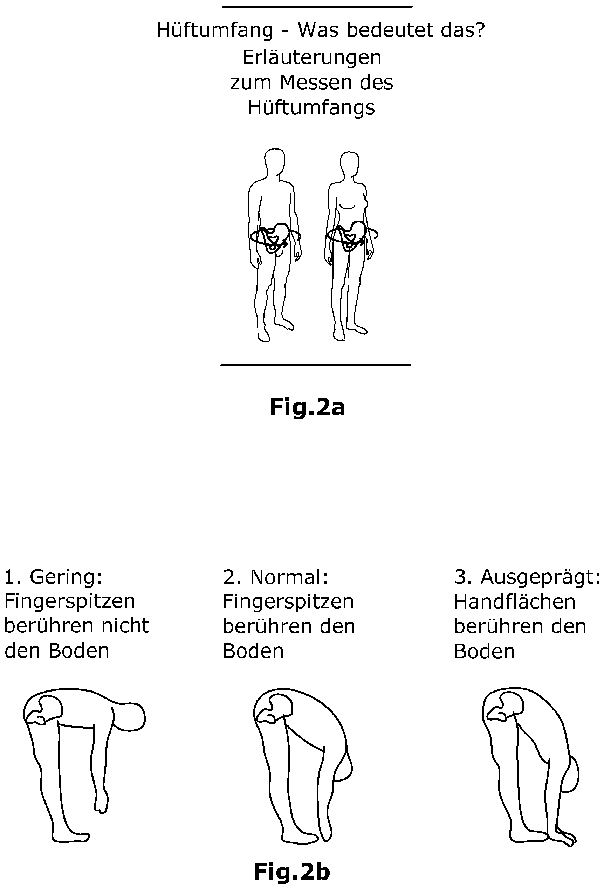

Im nächsten Schritt gelangt der Benutzer zu dem Reiter "Körpermaße". Hierbei wird zunächst abgefragt, ob dem Benutzer der Sitzknochenabstand bekannt ist. Sollte dies der Fall sein, wird der Sitzknochenabstand mit Hilfe eines Pull-Down-Menüs ausgewählt oder kann alternativ unmittelbar eingegeben werden. Die Abfragefelder H, I und J entfallen sodann. Klickt der Benutzer das Feld vor "Ich kenne meinen Sitzknochenabstand nicht." an, erfolgen die Abfragen H, I und J. in diesem Fall muss der Benutzer sodann die Körpergröße, das Körpergewicht und den Hüftumfang in den nächsten Schritten eingeben. Dies kann durch Pull-Down-Menüs und entsprechende Auswahl erfolgen oder unmittelbar durch Eingabe der Werte. Beim Anklicken des Feldes J, in dem der Hüftumfang eingegeben werden soll, erscheint auf dem Bildschirm zusätzlich eine in Figur 2a abgebildete Darstellung. Durch diese wird die Bestimmung des Hüftumfangs erläutert. Sodann erfolgt unter K die Abfrage der Flexibilität im Beckenbereich. Hierbei erscheint die in Figur 2b dargestellte Erläuterung. Bei den Eingaben Alter, bevorzugte Sitzposition, jährliche Fahrleistung, Druckempfindlichkeit im Sitzbereich und Flexibilität im Beckenbereich handelt es sich um Einflussfaktoren, die in der Gleichung 2 mit $F_1$ - $F_5$ berücksichtigt werden.

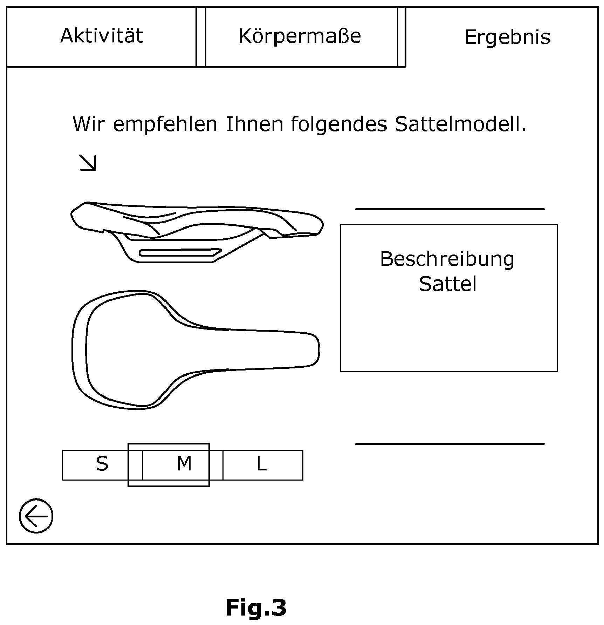

Im nächsten Schritt drückt der Benutzer auf den dritten mit "Ergebnis" bezeichneten Reiter. Hierdurch erfolgt eine Bestätigung der getroffenen Angaben, sodass der im Hintergrund laufende Algorithmus eine Bestimmung in der individuellen Fahrrad-Sattelgröße durchführen kann. In der in Figur 3 dargestellten dritten Maske wird dem Käufer sodann ein Sattelmodell empfohlen. Gegebenenfalls können auch mehrere Sattelmodelle empfohlen werden, die für den Benutzer auf Grund der berechneten Sattelbreite geeignet sind und sich beispielsweise im Design unterscheiden. Bei der Empfehlung des Sattelmodells können die zuvor abgefragten Daten nicht nur hinsichtlich der erfolgenden Berechnung mit Hilfe des Algorithmus berücksichtig werden, sondern auch bei der Auswahl des Satteltyps. Gibt ein Benutzer beispielsweise unter dem Reiter "Aktivität" bei D als Sitzposition "sportlich" an, so kann dies Einfluss auf das empfohlenen Sattelmodell haben.

Bei einer einfachen Ausführungsform des Algorithmus ist beispielsweise für die drei Sattelgrößen S, M oder L ein Ergebnisbereich von < 80, 80 - 120 und > 120 zugeordnet. Es erfolgt sodann beispielsweise mit Hilfe des Algorithmus in Abhängigkeit des Hüftumfangs ein Auslesen eines korrespondierenden Sitzknochenabstandes aus einer hinterlegten Tabelle. Diese weist beispielsweise einen individuellen Sitzknochenabstand von 100 auf. Dieser Wert kann sodann durch die unterschiedlichen Einflussfaktoren und körperspezifischen Maße, insbesondere gemäß Gleichung 2 verändert werden. Bei einem einfachen Ausführungsbeispiel erfolgt ein verändern des aus der Tabelle entnommenen bzw. durch Gleichung 1 berechneten Sitzknochenabstandes durch addieren oder subtrahieren entsprechender Größen (Gleichung 2). Beispielsweise kann diese Zahl durch die Eingabe "Rennrad" um einen vorgegebenen Wert von beispielsweise 0,5 verringert oder durch die Eingabe "Mountain-Bike" um einen vorgegebenen Wert von beispielsweise 0,5 erhöht werde. Eine entsprechende Veränderung dieses Wertes kann in Abhängigkeit der Eingabe "moderat" oder "sportlich" erfolgen, wobei beispielsweise bei "moderat" wiederum eine Erhöhung des Werts um beispielsweise 0,5 und bei Eingabe "sportlich" eine Verringerung des Werts um beispielsweise 0,5 erfolgen. Eine Veränderung des Wertes erfolgt sodann beispielsweise durch die Eingabe der Kilometerleistung. Hierbei können Grenzen definiert werden, wobei es bevorzugt ist, dass in Abhängigkeit der Eingabe "Mountain-Bike" oder "Rennrad" unterschiedliche Grenzen definiert werden. So könnten bei der Eingabe von "Rennrad" die Grenzen > 20.000 km, 10.000 - 20.000 km und < 10.000 km definiert werden. Beim "Mountain-Bike" könnten als Grenzen > 10.000 km, 5.000 - 10.000 km oder < 5.000 km pro Jahr definiert werden. Der Wert wird sodann beispielsweise bei höheren Werten um 0,5 verringert, bei mittleren Bereichen nicht verändert und bei geringen Kilometerleistungen um 0,5 erhöht. Eine entsprechende Veränderung dieses Wertes kann sodann auch bei der Eingabe Gewicht erfolgen. Hierbei könnte durch eine Zusatzabfrage eine geschlechtsspezifische Staffelung der Grenzen erfolgen. Bei einem Mann können beispielsweise die Grenzen > 80 kg, 70 - 80 kg und < 70 kg und bei einer Frau > 70 kg, 60 - 70 kg und < 60 kg definiert werden. Entsprechend wird der Wert bei hohem Körpergewicht beispielsweise um 0,5 erhöht, bei mittlerem Körpergewicht nicht verändert und bei geringem Körpergewicht um 0,5 verringert. Eine entsprechende Veränderung des Wertes kann sodann auch bei der Größeneingabe erfolgen. Diese könnte wiederum geschlechtsspezifisch sein. Bei einem Mann könnten als Grenzen > 185 cm, 170 - 185 cm und < 170 cm und bei einer Frau > 175 cm, 160 - 175 cm und < 160 cm definiert werden. Bei großen Benutzern erfolgt sodann ein erhöhen der Zahl um beispielsweise 0,5, bei mittlerer Größe erfolgt keine Veränderung der Zahl und bei kleinen Benutzern eine Verringerung der Zahl um beispielsweise 0,5.

Bei dieser beispielhaften Bestimmung eines Berechnungsergebnisses mit Hilfe des erfindungsgemäßen Algorithmus, erfolgt somit zusätzlich zu der Berücksichtigung des Sitzknochenabstandes eine Berücksichtigung unterschiedlicher Variablen wie körperspezifischer Maße und weiterer Einflussfaktoren. Aufgrund des durch den Algorithmus errechneten Ergebnisses wird sodann die entsprechende Sattelgröße S, M oder L bestimmt. Diese kann wie in Figur 3 dargestellt auch noch visualisiert werden. Hierauf basierend wird sodann eine Empfehlung ausgesprochen.

## Patentansprüche

1. Verfahren zur individuellen Bestimmung einer Fahrrad-Sattelgröße, mit den Schritten:

   Bestimmen eines Sitzknochenabstandes;
   Bestimmen weiterer Einflussfaktoren;
   Zuordnen von Variablen zu den weiteren Einflussfaktoren;
   Berechnen eines verifizierten Sitzknochenabstandes mit Hilfe eins Algorithmus auf Basis des bestimmten Sitzknochenabstandes und der Variablen und
   Festlegen einer Sattelgröße auf Basis des berechneten verifizierten Sitzknochenabstands.

2. Verfahren nach Anspruch 1, bei welchem als weiterer Einflussfaktor das Alter und/ oder die bevorzugte Sitzposition und/ oder die Jahreskilometerleistung und/ oder die Druckempfindlichkeit im Sitzbereich und/ oder die Flexibilität im Beckenbereich des Benutzers bestimmt bzw. abgefragt wird.

3. Verfahren nach Anspruch 1 oder 2, bei welchem mindestens ein Hauptfaktor bestimmt wird und der Hauptfaktoren Variablen des Algorithmus festlegt.

4. Verfahren nach Anspruch 3, bei welchem die Hauptfaktoren das Geschlecht und/ oder der Fahrtyp sind.

5. Verfahren nach einem der Ansprüche 1 - 4, bei welchem jeder Sattelgröße ein Ergebnisbereich, der durch den Algorithmus erfolgte Berechnung, zugeordnet ist.

6. Verfahren nach einem der Ansprüche 1 - 5, bei welchem die Variablen stufenweise und/oder stufenlos festgelegt werden.

7. Verfahren nach einem der Ansprüche 1 - 6, mit den zusätzlichen Schritten zur Bestimmung des Sitzknochenabstandes:

Eingabe eines Hüftumfangs eines Benutzers in ein Computersystem,
Eingabe mindestens eines weiteren körperspezifischen Maßes des Benutzers, nämlich dessen Gewicht und/oder dessen Körpergröße in ein Computersystem.

8.  Verfahren nach einem der Ansprüche 1 - 7, bei welchem der Algorithmus einen experimentell bestimmten minimalen Körperwert und/ oder einen Statistikfaktor und/ oder einen Wert eines Sitzknochenabstand-Bereichs und/ oder einen Wert eines minimalen Sitzknochenabstands aufweist.

9.  Verfahren nach einem der Ansprüche 1 - 8, bei welchem mindestens ein weiterer Einflussfaktor bestimmt wird und der Algorithmus mindestens eine dem Einflussfaktor zugeordnete Variable zur Bestimmung eines verifizierten Sitzknochenabstands aufweist.

| Aktivität | Körpermaße | Ergebnis |
|---|---|---|

**A. Geschlecht**

☐       ☐

männlich     weiblich

**B. Alter**

☐       ☐       ☐

<30       30-50       >50

**C. Fahrradtyp**

☐       ☐

Mountainbike     Rennrad

**D. Wie ist Ihre Sitzposition?**

☐       ☐

entspannt     sportlich

**E. Wie hoch ist Ihre Kilometerleistung im Jahr?**

☐       ☐       ☐

<1000       1000-4000       >4000

**F. Druckempfindlichkeit im Sitzbereich**

☐       ☐

normal     sensibel       →

**Fig.1**

| Aktivität | Körpermaße | Ergebnis |
| --- | --- | --- |

G. Sitzknochenabstand

[_____ ▽]  ☐ Sitzknochenabstand unbekannt

H. Körpergröße

[_____] cm

I. Körpergewicht

[_____] kg

J. Hüftumfang

[_____] cm

K. Flexibilität im Beckenbereich

☐ gering     ☐ normal     ☐ ausgeprägt

← →

**Fig.2**

Hüftumfang - Was bedeutet das?
Erläuterungen
zum Messen des
Hüftumfangs

**Fig.2a**

1. Gering:
Fingerspitzen
berühren nicht
den Boden

2. Normal:
Fingerspitzen
berühren den
Boden

3. Ausgeprägt:
Handflächen
berühren den
Boden

**Fig.2b**

| Aktivität | Körpermaße | Ergebnis |

Wir empfehlen Ihnen folgendes Sattelmodell.

↘

Beschreibung
Sattel

| S | M | L |

**Fig.3**

**Europäisches Patentamt**
**European Patent Office**
**Office européen des brevets**

# EUROPÄISCHER RECHERCHENBERICHT

Nummer der Anmeldung

EP 18 17 3961

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2006/218809 A1 (BIRD CARL [US] ET AL) 5. Oktober 2006 (2006-10-05) | 1-6,8,9 | INV. B62J1/00 G01B21/00 A61G5/10 G01B5/02 A47C31/12 |
| A | * Absatz [0036] - Absatz [0044] * * Absatz [0051] - Absatz [0054] * * Abbildungen * ----- | 7 | |
| X,P | EP 2 508 126 A1 (SQLAB GMBH [DE]) 10. Oktober 2012 (2012-10-10) | 1-6,9 | |
| A,P | * Absatz [0002] * * Absatz [0011] - Absatz [0016] * * Abbildungen * ----- | 7,8 | |

**RECHERCHIERTE SACHGEBIETE (IPC)**

B62J
G01B
A61G
A47C
A61B

Der vorliegende Recherchenbericht wurde für alle Patentansprüche erstellt

| Recherchenort | Abschlußdatum der Recherche | Prüfer |
|---|---|---|
| München | 10. September 2018 | Avisse, Marylène |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 17 3961

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-09-2018

| Im Recherchenbericht angeführtes Patentdokument | Datum der Veröffentlichung | Mitglied(er) der Patentfamilie | Datum der Veröffentlichung |
|---|---|---|---|
| US 2006218809 A1 | 05-10-2006 | US 2006218809 A1<br>US 2007273185 A1<br>US 2008134533 A1 | 05-10-2006<br>29-11-2007<br>12-06-2008 |
| EP 2508126 A1 | 10-10-2012 | DK 2508126 T3<br>EP 2508126 A1<br>ES 2462994 T3 | 02-06-2014<br>10-10-2012<br>27-05-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1698545 A
- EP 1698454 A